# EUROPEAN PATENT APPLICATION

(11) **EP 2 367 368 A1**
(43) Date of publication of application: **21.09.2011**
(21) Application number: 10155678.5
(22) Date of filing: 05.03.2010
(51) Int. Cl.: H04W 4/16

(54) **Fixed network service provisioning using a mobile network**

(71) Applicant: Koninklijke KPN N.V., 2516 CK The Hague (NL)
(72) Inventor: Veenstra, Pieter, 2518 HR, The Hague (NL); Berière, Joseph, 2585 EP, The Hague (NL)

(57) **Abstract**

A method and a system for providing one or more fixed network services using a mobile network are described. The method comprises: connecting a geographically fixed terminal via a radio interface to a mobile network; associating said terminal with a fixed packet-switched network; and, said packet-switched network executing one or more fixed network services associated with said terminal.

## Description

### Field of the invention

The invention relates to fixed network service provisioning using a mobile network, and, in particular, though not necessarily, to a method and a system for providing one or more fixed network services using a mobile network, and a computer product program using such method.

### Background of the invention

Currently many network operators are migrating from Public Switched Telephone Networks (PSTN) to so-called Next Generation Networks (NGN), which typically to IP-based communications systems. As such NGN services require high bandwidth connections, in parallel to such network migration low-bandwidth fixed connections, e.g. copper-based access lines, are upgraded to high-speed, high-bandwidth optical fibre-based fixed lines.

A change of all copper-based lines to optical-fibre lines, especially in remote, low-populated geographical areas, may not be economically feasible for an operator. Regulatory requirements however - sometimes referred to as universal service obligations (USO) - often require operators to provide certain services to subscribers regardless of the costs involved for such service provisioning. Services required under an USO are hereafter referred to as USO services. Such fixed network services (or in short fixed services, i.e. services provided by a fixed network) are not limited to PSTN-type fixed services such as elementary call services but may also include more advanced packet-switched fixed services such as multi media services and/or Internet services. Further, in certain situations (e.g. on large construction cites) it may be desired to temporality install one or more fixed terminals for providing fixed services.

One way of complying with such regulatory requirements or realising installation of a number of such fixed terminals without the need to install a fixed network in a desired area is to provide these fixed services through a mobile network. Although the look-and-feel of mobile services often are similar to those provided by a fixed network, e.g. a PSTN network or an NGN network, implementation of fixed services in a mobile network however may be problematic due to the fact that in a fixed network, services and billing are implemented around geographical number plans such as E.164. Moreover, certain USO services such as Carrier (Pre)Select services are not implemented in a mobile network. Also the */# subscriber control commands for e.g. the activation and deactivation of similar supplementary call services are somewhat different in the PSTN and mobile networks due to differences in standards.

Hence, implementation of such PSTN-type services requires substantial modifications to the mobile network. In particular, such solution would require implementation of geographic number and PSTN specific billing functionality in the mobile network and further services which are not available in the mobile network, thus mitigating the costs associated with the implementation of fixed fibre-based lines to costs associated with modification of the mobile network.

Hence, there is a need in the art for improved methods and systems, which may provide fixed network services to subscribers in areas, which are not provided with a connection to a fixed network, in a simple and cost-effective way.

### Summary of the invention

It is an object of the invention to reduce or eliminate at least one of the drawbacks of known service provisioning systems. In a first aspect the invention may relate to a method for providing one or more fixed network services using a mobile network. The method may comprise: connecting a geographically fixed terminal via a radio interface to a mobile network; associating said terminal with a fixed packet-switched network; and, said packet-switched network executing one or more fixed network services associated with said terminal. In one embodiment, said terminal may be associated with a number originating from a geographical number plan, preferably a geographical number plan as defined in E.164 or an equivalent hereof. In another embodiment, said mobile network is configured to prevent provisioning of mobile network services to said terminal, preferably said configuration being implemented on the basis of service provisioning information stored in the user profile of said terminal.

Hence, the invention allows implementation of fixed network services without requiring substantial changes to the mobile network. It makes the mobile core to function as an extension of a fixed IP-based network comprising one or more dedicated fixed network applications servers for handling the fixed network services e.g. USO services. This way geographically fixed terminals, e.g. USO terminals, being connected through a radio interface to the mobile core may use numbers based on a geographical number plan without substantial modifications to the architecture of (network nodes in) the mobile network. The invention further allows billing of USO services on the basis of geographical PSTN-type number plans. Further, the solution offered by the invention is fully compatible with future transition of 2G and/or 3G to 4G (LTE) mobile networks.

In one embodiment said mobile network and said fixed network may be connected to a service transfer function, preferably a Voice Call Continuity function, for transferring one or more service requests associated with said terminal from said mobile network to said fixed packet-switched network.

In another embodiment the method may comprise: said mobile network receiving a service request associated with said terminal, preferably said service request comprising identification information for identifying said terminal and called party information associated with a called terminal, preferably said called party information being a Mobile Station International ISDN Number or an equivalent hereof; on the basis of said identification information, associating calling party information with said service request.

In yet another embodiment, the method may comprise: on the basis of said calling party information retrieving routing information, preferably an IP Multimedia Routing Number or an equivalent hereof, from said anchoring function; transmitting said service request on the basis of said routing information to said fixed packet-switched network.

In one variant, the method may comprise: on the basis of said calling party information, the fixed packet-switched network associating a service request originating from said terminal with one or more originating fixed network services; routing said service request to at least one application service for executing said one or more fixed originating network services.

In another variant at least one of said fixed originating network services may comprise: associating said calling party information with a geographical number originating from a geographical number plan; inserting said geographical number in said service request; and, sending said service request to said called terminal.

In a further variant, the method may comprise: said fixed packet-switched network receiving a service request comprising called party information associated with said terminal; providing on the basis of said called party information one or more fixed terminating network services; if said called party information is a geographical number associated with said terminal, executing at least one of said one or more fixed terminating network services.

In yet a further variant, the method may comprise: if said called party information is the Mobile Station International ISDN Number or an equivalent hereof associated with said terminal, rejecting said service request.

In one embodiment said fixed network services comprise services, preferably PSTN-type services, associated with one or more Universal Service Obligations.

In another embodiment said fixed network services may comprise at least one of the following services: local area code number dialling services, supplementary call services, Carrier Select services and/or and Carrier PreSelect services.

In another aspect, the invention may relate to a system for providing one or more fixed network services using a mobile network comprising: at least one geographically fixed terminal connected via a radio interface to a mobile network; said mobile network being configured to prevent provisioning of mobile network services to said terminal; a packet-switched network comprising one or more application servers comprising one or more fixed network service applications; a routing database for relaying service request associated with said terminal to said one or more application servers.

The invention may also relate to a computer program product comprising software code portions configured for, when run on a routing server, executing at least one of the method steps as described above.

The invention will be further illustrated with reference to the attached drawings, which schematically show embodiments according to the invention. It will be understood that the invention is not in any way restricted to these specific embodiments.

### Brief description of the drawings

**Fig. 1** depicts a schematic of at least part of at least part of an administrative domain for providing fixed services according to one embodiment of the invention.
**Fig. 2** depicts a schematic of a signaling flow scheme according to another embodiment of the invention.
**Fig. 3** depicts a schematic of a signaling flow according to another embodiment of the invention.
**Fig. 4** depicts a schematic of a signaling flow according to yet another embodiment of the invention.

### Detailed description

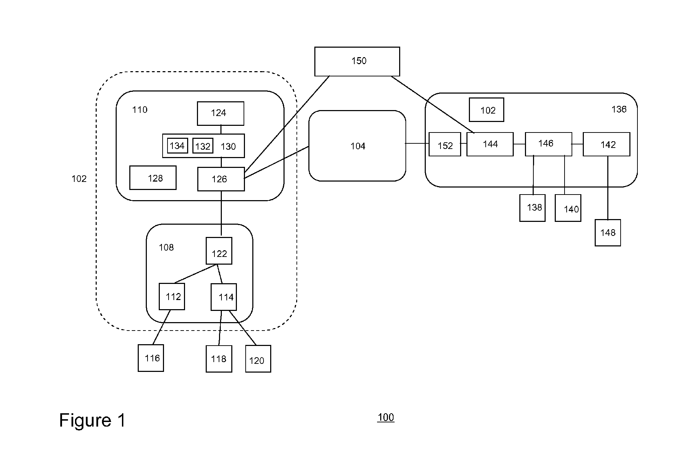

**Fig. 1** depicts a schematic of at least part of an administrative domain **100** for providing fixed (network) services, e.g. USO services, to at least one or more fixed-network subscribers according to one embodiment of the invention. Such administrative domain may be regarded as a network system comprising at least a mobile network interconnected to at least one fixed IP-based NGN which are configured for providing fixed services to geographically fixed terminals connected to the mobile network. The mobile network **102** may be connected via a PSTN **104** or directly to a fixed IP-based NGN network **106**. Although, the examples hereunder are described in the context of provisioning USO services to geographically fixed terminals connected to the mobile network, the invention may be applicable to the provisioning of any type fixed network service to a geographically fixed terminal connected to the mobile network.

The mobile network may relate to a 2G or a 3G-type mobile network comprising a mobile packet switched (Mobile PS) core network, a mobile circuit switched (Mobile CS) core network and a radio access network. The exemplary mobile network in **Fig. 1** depicts a 3G network (e.g. an UMTS network) comprising a radio access network (RAN) **108** and a mobile core **110.** The RAN may comprise one or more access nodes, e.g. radio base stations (Node-B) **112,114,** serving as access points for mobile equipment MEs **116-120** located within a certain area (cell) around the base station. The access nodes may be connected via one or more control nodes, e.g. a Radio Network Controller (RNC) **122**, to the mobile core comprising a serving node such as a Serving GPRS Support Node (SGSN) **124** for packet-switched traffic and a Mobile Switching Center (MSC) **126** for circuit switched traffic. The mobile core may comprise a register, e.g. a visiting location register (VLR) **128**, for storing data associated with MEs connected to the visiting network. Such register may also be used for the execution of security functions.

The serving node may be further linked to a home location register (HLR) **130**. This register may be used for storing user related data, e.g. subscription related data, in a subscriber profile **132** and may co-operate with the serving node and the VLR **128** to keep track of the location of MEs. The register associated with the home network may be further associated with an authentication centre (AuC) **134,** which may be connected to or co-located with the HLR. The AuC comprises (amongst others) algorithms for calculation of authentication parameters used in the authentication procedure.

The exemplary NGN in **Fig. 1** depicts a fixed IMS platform. IMS is designed to provide IP Multimedia over mobile communication networks (3GPP TS 22.228, TS 23.218, TS 23.228, TS 24.228, TS 24.229, TS 29.228, TS 29.229, TS 29.328 and TS 29.329). For fixed broadband services, such as Voice over IP (VoIP), the ETSI TISPAN working group is further developing IMS (TS 24.229: IP Multimedia Call Control Protocol based on SIP and SDP). Within the IMS architecture, the basic user subscription functions and the IP session management are decoupled from the specific VoIP service functions, e.g. number analysis, CLIP/R, Call Waiting, Call Barring, etc. These services are handled within one or more trusted application servers residing in the network.

The IMS may comprise IMS core **136** coupled to a number of trusted application servers **138,140** for hosting services such as voice-centric (VoIP), multimedia and billing services. The IMS core may comprise a set of Call/Session Control Functions (CSCF), including a Proxy-CSCF (P-CSCF) **142**, an Interrogating-CSCF (I-CSCF) **144** and a Serving-CSCF (S-CSCF) **146**. For a terminal **148** the P-CSCF is the first contact within the IMS core and (in typical deployments Border Control Functions are used in front of the P-CSCF), using routing information during the registration of terminals to the IMS system, it routes signaling messages (e.g. SIP messages) to the S-CSCF associated with a terminal. The I-CSCF identifies the correct S-CSCF for each incoming SIP request and forwards the request via a P-CSCF to the designated S-CSCF. Its IP address is published in the DNS of the domain so that remote servers may find it. Further, the S-CSCF performs the session control services and acts as a SIP registrar.

One or more terminals MEs **116-120** connected to the mobile network may be configured as geographically fixed terminals. For example a terminal may be associated with a subscriber located for example in a remote area where the operator cannot provide fixed network services. In one embodiment, such terminal may relate to a conventional fixed-line terminal connected to a geographically fixed home base station, which is provided with a radio interface for contacting the mobile network. In a further embodiment, such terminal may relate to a wireless terminal, e.g. a DECT or the like, allowing within a limited area a wireless connection to a geographically fixed home base station comprising an radio interface to the mobile network. Alternatively, the terminal may be similar to a conventional mobile terminal comprising a radio interface to a base station of a mobile phone. In such implementation, the use of the wireless USO terminal is geographically fixed in the sense that its use is limited to a specific predetermined geographical area. Geographical fixation to a predetermined location may be realized using location information associated with the terminal. Such location information may for example be generated by a GPS system in the terminal or based on triangulation in the terminal or position measuring in the mobile radio access network. If such geographically fixed terminal is designated to provide USO services, such terminal may be referred to as an USO terminal.

In contrast with a conventional mobile terminal, geographically fixed mobile terminal may be provided with the look-and-feel of a conventional fixed-line terminal in the sense that it is associated with a conventional geographical number, e.g. an E.164 type number comprising a local area code. Further it may be configured to access fixed services, e.g. PSTN-type services such as support of PSTN terminals with pulse dialling (e.g. rotary phones), local dialling within the local area (i.e. no need to dial the local area code), Local Number Portability service, Carrier Select and Carrier PreSelect services and supplementary call services such as Calling Line Identification, Call Waiting, Call Forwarding, etc.

In the terminal implementations as described above, the geographically fixed terminal is wirelessly connected to the mobile network using a radio interface and a secure module, e.g. a SIM or an USIM, for authentication purposes. In addition, the security may be enhanced as movement of such terminal may be detected and restricted to the geographic location of the subscriber. Hence, the geographically fixed terminal identifies itself to the mobile network in a similar way as conventional mobile terminals, using the IMSI, which uniquely identifies the SIM or the USIM.

The mobile core, in particular the HLR, uses the IMSI in a service request in order to associated the USO terminal with the Mobile Station International ISDN Number (MSISDN), e.g. +31612345678, which uniquely identifies a subscription in the mobile network. For the sake of simplicity, in the examples hereunder it is assumed that a MSISDN may be dialled by the user without the use of the country code, e.g. 06-12345678. Contrary to conventional mobile terminals however, the user of the USO terminal has only knowledge of the geographical number and is not aware of the MSISDN, which is used by the mobile network.

The one or more USO terminals may be registered within the HLR of the mobile network. In the user profile associated with an USO terminal all mobile services, including the supplementary call services such as Calling Line Identification, Call Waiting, Call Forwarding, etc., and roaming services, are turned off. Hence, services requests associated with USO terminals are not executed in the mobile network. Instead, the service request is routed to the fixed NGN network, which comprises one or more application servers **138,140** (AS) comprising originating and terminating USO services associated with USO terminals.

To that end, the IN trigger information in HLR may be configured such that all outgoing and incoming call set-up's of USO terminals are controlled by a service transfer function for transferring service requests associated with a terminal connected to the mobile network from the mobile network to the IMS.

In one embodiment, the service transfer function may be implemented as a Voice Call Continuity function (VCC) **150** as defined in 3GPP TS 23.206. A VCC is normally configured to provide seamless transfer when a mobile phone moves between circuit switched and packet switched radio domains. In the present application, however such VCC may be used differently as the terminal associated with the fixed network services is a mobile terminal which is geographically "fixed" to a certain location (i.e. its use is limited to a fixed predefined area). Towards the Mobile CS network the VCC acts as a VLR and towards the IMS core it acts as an application server.

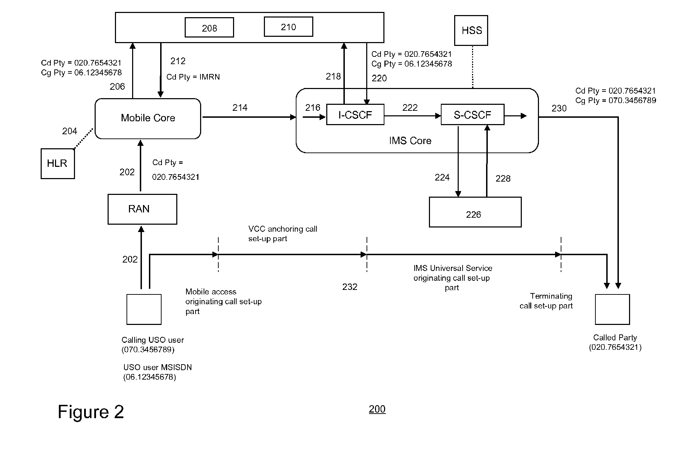

In response to the service request, the VCC may associated the request with a routing number, e.g. an IP Multimedia Routing Number (IMRN) as defined in 3GPP 23.206, to the fixed IP-based IMS network for handling the USO services. Further, the VCC may manage transfer of service information in the service request (e.g. called and calling party information) from the mobile core to the IMS core. This transfer of service information will be discussed hereunder in more detail with reference to **Fig. 2-4****.**

Using the routing number the mobile core may forward the USO service request to the IMS core designated by the VCC. In case the mobile CS network is still being interconnected to the IMS Core via the PSTN, the service request may be sent via the PSTN network to the Media Gateway Control Function **152** (MGCF) at the border of the IMS network. The MGCF may convert the USO service request in the circuit switched domain (e.g. an ISUP message) to an equivalent USO service request in the packet switched domain (e.g. a SIP message) and vice-versa.

The USO service request is subsequently forwarded to the I-CSCF, which invokes the VCC in order to retrieve the service information associated with the service request. Thereafter the S-CSCF may associate the service request with a registered USO terminal. Upon identification of a call request originating from an USO terminal, the S-CSCF may then forward the service request to an application server (AS) for providing one or more USO services. Such application server hereafter will be referred to as an USO application server.

In one embodiment, an USO service may relate to replacing the MSISDN, the USO terminal, e.g. the MSISDN, to a PSTN number, e.g. a geographic local area number. Further, USO services may relate to PSTN specific billing, Carrier (Pre)Selection handling and supplementary services handling such as Outgoing Call Barring and Calling Line Identification Restriction.

**Fig. 2** depicts a schematic of a signaling flow 200 according to one embodiment of the invention. In particular, this schematic relates to an outgoing service request, e.g. an outgoing call request, originating from a USO terminal associated with particular local geographical number, e.g. 070-345678. When a user initiates a service request for setting up a call with a destination terminal, the USO terminal sends in a first step **202** a call request via its radio interface to the mobile core. The call request may comprise the ISIM associated with the (U)SIM of the USO terminal and called party information CdPty, e.g. a local geographic number 020-7654321 associated with the destination terminal. In response to the reception of the request, the MSC requests the HLR to associated the IMSI with the calling party information (CgPty), e.g. a MSISDN (step **204**). On the basis of the user profile associated with the calling party information, the mobile core then determines that the request relates to a call request originating from an USO terminal. In response to the IN trigger information in the user profile, the MSC then sends an USO routing request, typically in the form of a Camel signaling message, comprising the calling and called party information to the VCC for requesting routing information for routing the USO call request to a network element configured to execute one or more USO services associated with the USO call request (step **206**).

When receiving the USO routing request, the VCC provides a routing number, e.g. IP Multimedia Routing Number (IMRN), selected from an available pool of routing numbers (step **208**). The routing number is an unique number used for routing the USO request to a desired fixed IP-based NGN (in this case an IMS network) which is configured to execute the USO services. The routing number is used during the call setup for identifying the transfer of the signaling messages associated with the USO service request from the mobile circuit switched domain to the fixed packet switched domain. Further, the VCC stores the calling and called party information in a memory for temporarily storages during the signaling transfer (step **210**) and returns the routing number to the MSC (step **212**).

The HSS may be provided with the pool of routing numbers as used by the VCC, so that functions in the IMS core, in particular the I-CSCF, may relay incoming SIP messages comprising such routing number to the desired target location. Further, the HSS may comprise initial filter criteria (iFCs). An iFC may be generally regarded as service routing rules comprising a filter part and a decision part. The filter part comprises so-called Trigger Points, defining one or more filter criteria, which are applied to the incoming service message. The decision part specifies the action(s) to be taken when the incoming message matches with the filter criteria of the rule. The iFC thus comprises information for determining whether or not a signaling message (e.g. a SIP message) should be routed to a service located in a particular application server. The iFCs may be defined as described in TS 129 228 paragraph B.2.2, which is hereby incorporated by reference in this application.

On the basis of the iFCs the MSISDN and the associated "fixed" geographical number of each USO subscriber may thus be related to one or more USO application servers. This way, within the IMS network, an unambiguous relation between originating or terminating USO service requests and the USO application servers handing these USO service request is established.

The MSC then sends a signaling message comprising the routing number, e.g. a ISUP signaling message, via the PSTN to the MGCF at the border of the IMS (step **214**). The MGCF translates the USO call request, an ISUP message, in a corresponding USO call request for use in the IP-domain, i.e. a SIP message and forwards the USO SIP request comprising the IMRN to the I-CSCF (step **216**). In response, the I-CSCF relays the USO SIP request to the VCC, which acts towards the IMS core as a SIP application server (step **218**). On the basis of the IMRN, the VCC retrieves the stored called and calling party information and returns a USO SIP message comprising the retrieved information back to the I-CSCF (step **220**), which forwards the USO SIP message to the S-CSCF (step **222**). On the basis of the information in the USO SIP message and the iFCs in the HSS, the S-CSCF then routes the USO SIP request message to the appropriate originating USO application server (step **224**) .

In response, originating USO application server executes one or more USO services (step **226**). It may replace the MSISDN number with the PSTN number of the USO subscriber. It may also generate a CDR for the purpose of billing the requested services. Further, supplementary service handling and carrier (Pre)Selection service handling may be executed. Hence, after executing the originating USO services, the USO application server sends a USO SIP message comprising the calling party information and the called party information in the form of the PSTN number of the USO subscriber, back to the S-CSCF (step **228**). This SIP message is subsequently routed to the destination terminal thereby completing the signaling path between the USO terminal of the calling party and the destination terminal of the called party (step **230**). After a subsequent acknowledgement of the destination terminal (e.g. through a SIP 200 OK message) the associated voice and/or data paths may established (step **232**) in the mobile network and the IMS network in order to allow voice and/or data exchange between the terminals in the call session.

Hence, the invention allows implementation of fixed network services without requiring substantial changes to the mobile network. It makes the mobile core to function as an extension of a fixed IP-based network comprising one or more dedicated fixed network applications servers for handling the fixed network services e.g. USO services. This way geographically fixed terminals, e.g. USO terminals, being connected through a radio interface to the mobile core may use numbers based on a geographical number plan without substantial modifications to the architecture of (network nodes in) the mobile network. The invention further allows billing of USO services on the basis of geographical PSTN-type number plans. Further, the solution offered by the invention is fully compatible with future transition of 2G and/or 3G to 4G (LTE) mobile networks.

Due to differences in the standards of mobile and fixed networks, a mobile network, e.g. GSM or an UMTS network, is not capable of delivering PSTN-type supplementary services. For example, for PSTN-type networks (e.g. ISDN) the activation and deactivation codes for Directed-To-Number are *21*DTN# and #21# respectively. For a GSM or UMTS-type network however the activation and deactivation codes are *21*DTN# and #21*.

In the system according to the invention, this problem is solved by not allowing an USO terminal to access mobile services offered by the mobile network. All mobile services are turned off by setting the appropriate parameters in the USO user profile as stored in the HLR. Further, all PSTN-type supplementary service codes used by an USO terminal are transparently sent in-band via the signaling messages to the USO application server in the IMS network, which is configured to execute PSTN-type call services. This way the invention enables simple execution of PSTN-type supplementary services using an USO terminal, which is connected via a radio interface to the network. The same holds for executing Carrier (Pre)Select services using an USO terminal.

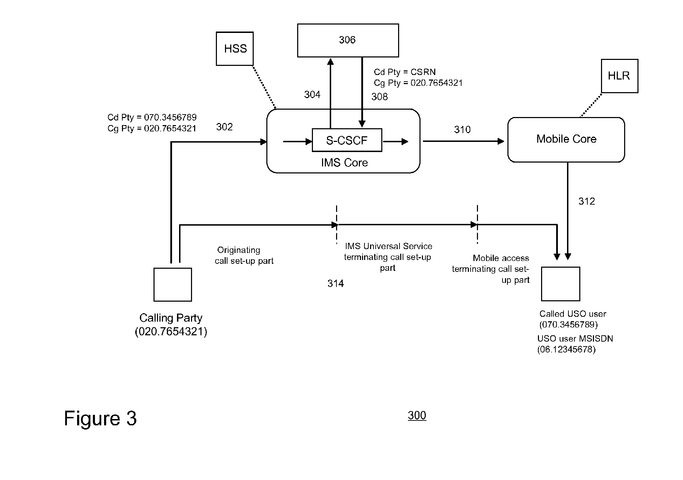

**Fig. 3** depicts a schematic of a signaling flow 300 according to one embodiment of the invention. In particular, this schematic relates to a service request originating from a conventional IP-based terminal, e.g. VoiP phone or the like, associated with particular local geographical number, e.g. 020-7654321, to an USO terminal associated with a local geographical PSTN number, e.g. 070-3456789. In this case, the signaling flow starts with the terminal of the calling party sending a SIP request comprising the calling and called party information (CdPty,CgPty) to the IMS core (step 302). The S-CSCF may subsequently determine on the basis of the information in the HSS as described above with reference to **Fig. 2**, that the called party relates to an USO subscriber. In that case, using the iFC the S-CSCF may relay the request to a terminating USO application server for executing one or more terminating USO services (step **304**).

These terminating USO services may include associating the PSTN number of the called USO terminal with the MSISDN of the USO terminal. Also a CDR for billing purposes may be generated. Further, the terminating USO application server may retrieve a routing number, e.g. a CS domain Routing Number (CSRN) as defined in 3GPP TS 23.206) for routing the call request to the called USO terminal in the circuit switched (mobile) domain (step **306**).

In the circuit switched domain routing of signaling messages may be based on called party number analyses. In that case, a routing may be passed on a particular prefix (a Network Routing Prefix (NPR)) to the called party number. Hence, in one embodiment, the terminating USO application server may form a CSRN on the basis of the MSISDN and with a predetermined number of digits as a prefix. In that case, the CSRN thus comprises both the routing information and the MSISDN so that a separate VCC request is not required. Alternative ways for terminations to the mobile CS network are described in Annex C.1 of 3GPP TS 23.206.

The terminating USO application server may return the SIP request message comprising the CSRN and the calling party information CgPty back to the S-CSCF (step **308**) and instruct the S-CSCF to forward the message to the mobile core associated with the called USO terminal (step **310**). Similar to the situation as described with reference to **Fig. 2**, a MGCF at the border of the IMS network may translate the SIP message to an equivalent ISUP message comprising the calling party information CgPty and the MSISDN with the predetermined routing prefix (not shown). The PSTN may use called party number analysis in order to route the request to the called USO terminal (step **312**).

When the called USO terminal accepts the call, the associated voice and/or data paths may be established in the mobile network and the IMS network in order to allow voice and/or data exchange between the terminals in the call session (step **314**).

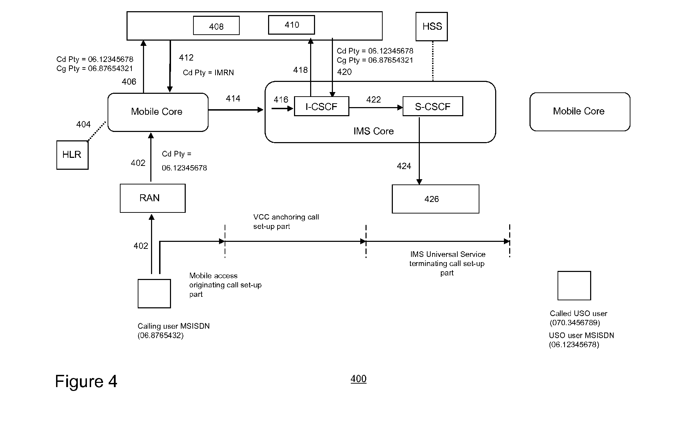

**Fig. 4** depicts a signaling flow relating to situation wherein a caller uses the MSISDN associated with a USO subscription in order to set up a call session with the USO terminal. In this example, a conventional mobile terminal connected to a first mobile core initiates a call request using the MSISDN 06-12345678 of an USO user connected to a second mobile core. The call request comprising the called party information CdPty 06-12345678 is send to the first mobile core where it is processed as call request of a conventional mobile terminal. In that case mobile services, including the supplementary call services such as Calling Line Identification, Call Waiting, Call Forwarding, etc., and roaming services, are possible and not turned off in the user profile (as in the case with a USO terminal).

The outgoing call request associated with the mobile terminal may be processed in a similar way as steps **202-414** described with reference to **Fig. 2****,** including retrieval of the calling party information CgPty 06-87654321 from the HLR (steps **402,404**) and routing of the call request to S-CSCF in the IMS core using the VCC for enabling call transfer from the circuit switched domain to the packet switched domain (steps **406-414).** In the IMS core, the incoming call designated for the USO terminal is routed to a terminating application server in a similar way as described with reference to **Fig. 3** (steps **416-424).** In this case however, the service logic executed in the terminating application service will notice that the called party information, i.e. the MSISDN, in the call request relates to a number of an USO subscription. As the registered USO terminals form a closed user group in the terminating application service which may only be accessed using a PSTN number and not the associated MSISDN number, the service logic will reject the call attempt using e.g. a SIP response 404 (Not Found) message (step **426**). This way, direct access to USO terminals on the basis of the MSISDN may be prevented.

Although the invention is described with reference to an UMTS mobile network and an IMS fixed network, other types of mobile networks and NGNs may be used without departing from the scope of the invention. For example, the NGN may relate to an IP-based network based on a Soft Switch design whereby the basic user subscription functions, the IP session management and the specific VoIP service functions are fully or partially integrated within one or more trusted application servers residing in the network or by a third party outside the network. Similarly, the mobile network may relate to a 2G-type mobile network (e.g. GSM) or an IP-based Long Term Evolution (LTE) network. In case of a LTE mobile network, the VCC is no longer required as the LTE mobile network may be directly interconnected to the fixed NGN core.

It is to be understood that any feature described in relation to any one embodiment may be used alone, or in combination with other features described, and may also be used in combination with one or more features of any other of the embodiments, or any combination of any other of the embodiments. One embodiment of the invention may be implemented as a program product for use with a computer system. The program(s) of the program product define functions of the embodiments (including the methods described herein) and can be contained on a variety of computer-readable storage media. Illustrative computer-readable storage media include, but are not limited to: (i) non-writable storage media (e.g., read-only memory devices within a computer such as CD-ROM disks readable by a CD-ROM drive, flash memory, ROM chips or any type of solid-state non-volatile semiconductor memory) on which information is permanently stored; and (ii) writable storage media (e.g., floppy disks within a diskette drive or hard-disk drive or any type of solid-state random-access semiconductor memory) on which alterable information is stored.

Further, the invention is not limited to IMS but may also be implemented on the basis of a Soft Switch design whereby the basic user subscription functions, the IP session management and the specific VoIP service functions are fully or partially integrated within one or more trusted application servers residing in the network. Moreover, implementations of the invention using other service provisioning networks such as 3GPP Long Term Evolution (LTE) or 3GPP Service Architecture Evolution (SAE) networks are also foreseen. Although the embodiments are described with reference to the use of SIP in the IP domain and ISUP in the TDM domain, other suitable signaling protocols like H.323, H.248 and the MGCP (Media Gateway Control Protocol) may also be used. Moreover, the invention is not limited to the embodiments described above, which may be varied within the scope of the accompanying claims.

## Claims

1. Method for providing one or more fixed network services using a mobile network comprising:
connecting a geographically fixed terminal via a radio interface to a mobile network;
associating said terminal with a fixed packet-switched network; and,
said packet-switched network executing one or more fixed network services associated with said terminal.

2. Method according to claim 1, wherein said terminal is associated with a number originating from a geographical number plan, preferably a geographical number plan as defined in E.164 or an equivalent hereof.

3. Method according to claims 1 or 2, wherein said mobile network is configured to prevent provisioning of mobile network services to said terminal, preferably said configuration being implemented on the basis of service provisioning information stored in the user profile of said terminal.

4. Method according to any of claim 1-3, wherein said mobile network and said fixed network are connected to a service transfer function, preferably a Voice Call Continuity function, for transferring one or more service requests associated with said terminal from said mobile network to said fixed packet-switched network.

5. Method according to claim 4, comprising:
said mobile network receiving a service request associated with said terminal, preferably said service request comprising identification information for identifying said terminal and called party information associated with a called terminal, preferably said called party information being a Mobile Station International ISDN Number or an equivalent hereof;
on the basis of said identification information, associating calling party information with said service request.

6. Method according to claim 5, comprising:
on the basis of said calling party information retrieving routing information, preferably an IP Multimedia Routing Number or an equivalent hereof, from said anchoring function;
transmitting said service request on the basis of said routing information to said fixed packet-switched network.

7. Method according to any of claims 1-6, comprising:
on the basis of said calling party information, the fixed packet-switched network associating a service request originating from said terminal with one or more originating fixed network services;
routing said service request to at least one application server for executing said one or more fixed originating network services.

8. Method according to claim 7, wherein at least one of said fixed originating network services comprises:
associating said calling party information with a geographical number originating from a geographical number plan;
inserting said geographical number in said service request; and,
sending said service request to said called terminal.

9. Method according to any of claims 1-4 comprising:
said fixed packet-switched network receiving a service request comprising called party information associated with said terminal;
providing on the basis of said called party information one or more fixed terminating network services;
executing at least one of said one or more fixed terminating network services.

10. Method according to claim 9 comprising:
if said called party information is the Mobile Station International ISDN Number or an equivalent hereof associated with said terminal, rejecting said service request.

11. Method according to any of claims 1-10, wherein said fixed network services comprise services, preferably PSTN-type services, associated with one or more Universal Service Obligations.

12. Method according to any of claims 1-10, wherein said fixed network services comprise at least one of the following services: local area code number dialling services, supplementary call services, Carrier Select services and/or and Carrier PreSelect services.

13. A system for providing one or more fixed network services using a mobile network comprising:
at least one geographically fixed terminal connected via a radio interface to a mobile network; said mobile network being configured to prevent provisioning of mobile network services to said terminal;
a packet-switched network comprising one or more application servers comprising one or more fixed network service applications;
a routing database for relaying service request associated with said terminal to said one or more application servers.

14. A computer program product comprising software code portions configured for, when run on a routing server, executing the method according to any of claims 1-12.
